(19) Europäisches Patentamt
European Patent Office
Office européen des brevets

(11) **EP 4 773 602 A1**

(12) **EUROPEAN PATENT APPLICATION**

(43) Date of publication:
**08.07.2026  Bulletin 2026/28**

(21) Application number: **25315004.9**

(22) Date of filing: **03.01.2025**

(51) International Patent Classification (IPC):
**H04N 19/11** (2014.01)   **H04N 19/119** (2014.01)
**H04N 19/157** (2014.01)  **H04N 19/176** (2014.01)
**H04N 19/593** (2014.01)

(52) Cooperative Patent Classification (CPC):
**H04N 19/176; H04N 19/11; H04N 19/119;
H04N 19/157; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing Beijing 100085 (CN)**

(72) Inventors:
• **Tissier, Alexandre
Beijing, 100085 (CN)**

• **Plowman, Frank
Beijing C (CN)**
• **Ghaznavi Youvalari, Ramin
Beijing Beijing (CN)**
• **Abdoli, Mohsen
Beijing Beijing (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PROCESSING A PICTURE USING A DOMINANT ANGLE OBTAINED FOR AT LEAST A PART OF A SPATIAL GEOMETRIC PARTITIONING MODE BLOCK**

(57)   A method of processing one or more blocks of a picture is disclosed. The method includes obtaining a dominant angle for at least a part of a Spatial Geometric Partitioning Mode (SGPM) block.

```
obtaining a dominant angle for at least a part of
a Spatial Geometric Partitioning Mode (SGPM) block          —— S100
```

Fig. 13

## Description

### Technical Field

The present disclosure generally relates to the field of encoding/decoding pictures, images or videos, and embodiments of the present disclosure concern improvements regarding a prediction. More specific embodiments of the present disclosure relate to the processing of a picture using a dominant angle obtained for at least a part of a Spatial Geometric Partitioning Mode (SGPM) block.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding a picture, for certain aspects of the processing a state-of-the-art process using SGPM blocks makes use of a fixed or predefined or default angle for the prediction, which may not be optimal in all situations so that a performance of the process may not be optimal.

Thus, there is a need to provide further improvements for processing a picture, an image or a video using SGPM, e.g., when encoding and/or decoding of the picture, the image or the video.

### Summary

The present disclosure provides a method of processing one or more blocks of a picture, the method comprising: obtaining a dominant angle for at least a part of a Spatial Geometric Partitioning Mode (SGPM) block.

Optionally, wherein the dominant angle is obtained based on proportions of respective prediction modes within the SGPM block, and wherein an angle associated with a prediction mode having the highest proportion within the SGPM block is determined as the dominant angle.

Optionally,
the prediction modes comprise Intra Prediction Modes (IPMs) and/or non Intra Prediction Modes (non-IPMs), e.g., a Block Vector (BV) based prediction mode, and
in case the prediction mode having the highest proportion is a non-IPM, the dominant angle is obtained by

- applying a texture analysis method, e.g., a Decoder side Intra Mode Derivation (DIMD) process, on prediction samples obtained by the non-IPM prediction, or
- using an angle associated with another prediction mode, or
- using a default angle defined for a partition mode of the SGPM block.

Optionally, the dominant angle is obtained using

- weights associated with some or all pixels of the respective partitions of the SGPM block, or
- a size of the SPGM block and a partition mode of the SPGM block.

Optionally,

- the weights of some or all pixels inside the SGPM block are summed for the prediction modes of the respective partitions,
- the prediction mode with the highest sum of weights is determined as a dominant prediction mode, and
- an angle associated with the dominant prediction mode is determined as the dominant angle.

Optionally,

the dominant angle is obtained by using weights associated with all pixels of the respective partitions of the SGPM block, or
the dominant angle is obtained by using weights associated with only a part of the pixels of the respective partitions of the SGPM block, the part of the pixels comprising one or more of the following:

- one or more rows of pixels adjacent to a horizontal edge of the SGPM block, e.g., a bottom row of the SGPM block,
- one or more columns of pixels adjacent to a vertical edge of the SGPM block, e.g., a right-most column of the SGPM block,
- one or more pixels adjacent to a corner of the SGPM block, e.g., a bottom-right pixel of the SGPM block.

Optionally, the dominant angle is obtained from a predefined set of dominant angles, e.g., from a look-up table, each entry in the predefined set associating a certain combination of size and partition mode of the SPGM block with a dominant angle.

Optionally, the dominant angle is used for one of more of the following:

- a transform selection, e.g., for one or more of the transform coding methods used in the Enhanced Compression Model (ECM),
- using a co-located luma block for selecting a chroma prediction,
- a Most Probable Mode (MPM) list construction.

Optionally,

- a currently processed block is a SGPM block,
- a representative intra mode for the SGPM block is determined using the dominant angle obtained by using the entire SGPM block, and
- the representative intra mode is used, e.g., along with a Transform Unit (TU) size, to select one or more transforms for the SGPM block.

Optionally,

- a currently processed block is a chroma block,
- the SGPM block is a SGPM co-located luma block used by the chroma block for deriving a prediction mode,
- a representative intra mode of the SGPM co-located luma block is determined using the dominant angle, and
- the representative intra mode of the SGPM co-located luma block is used by the chroma block as the prediction mode.

Optionally,

- the SGPM block is a SGPM neighbor block of a currently processed block,
- a representative intra mode of the SGPM neighbor block is determined using the dominant angle, and
- the representative intra mode of the SGPM neighbor block is added to the MPM list.

Optionally, the SGPM neighbor block is a block adjacent to the currently processed block, the representative intra mode of the SGPM neighbor block is determined using the dominant angle obtained by using only a part of the SGPM neighbor block, and the part of the SGPM neighbor block comprises one or more of the following:

- in case the SGPM neighbor block is located above the currently processed block, one or more rows of pixels adjacent to the currently processed block,
- in case the SGPM neighbor block is located left of the currently processed block, one or more columns of pixels adjacent to the currently processed block,
- in case the SGPM neighbor block is located left and above the currently processed block, one or more pixels adjacent to a top-left pixel of the currently processed block.

Optionally, the SGPM neighbor block is a block not adjacent to the currently processed block, and wherein the representative intra mode of the SGPM neighbor block is determined using the dominant angle obtained by using the entire SGPM neighbor block.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:

a processing module, wherein the processing module is configured obtain a dominant angle for at least a part of a Spatial Geometric Partitioning Mode (SGPM) block.

The technical solutions provided according to embodiments of the present disclosure have the following beneficial effects.

In a state-of-the-art process using SGPM blocks a fixed, predefined or default angle for the prediction mode is used for different aspects of the process using, e.g., the Enhanced Compression Model (ECM). The aspects may include a transform selection, a co-located luma block for chroma prediction or a MPM list construction. Conventionally, the transform selection, co-located luma derivation for chroma and MPM list construction uses only one intra mode but always the intra mode associated with the default angle of the SGPM. Using always the default angle may not be optimal. For the transform selection this may be sub-optimal when a majority of the SGPM block is coded with a different angle, i.e., using a prediction mode associated with an angle different from the default angle. For the chroma prediction it may lead to a less accurate intra prediction mode. The MPM list construction may be sub-optimal, i.e., may not include the best prediction modes, when a majority of the SGPM block is coded with a different angle, i.e., uses a prediction mode associated with an angle different from the default angle.

Embodiments of the present disclosure address the shortcomings in the prior art by providing a dominant angle derivation for SGPM so that the processing, other than the prior art approaches, does not rely on a predefined or default angle but determines the dominant angle from the SGPM block, either from the entire SGPM block or from only a part of the SGPM block. The dominant angle may then be used for other processes, like the transform selection, co-located luma derivation for chroma and the MPM list construction.

The present disclosure is advantageous because, other than in conventional approaches using the default angle, obtaining the dominant angle for the SGPM block avoids a sub-optimal processing, e.g., a sub-optimal transform selection, co-located luma derivation for chroma and MPM list construction, thereby improving the performance of the process.

It is to be understood that the content described in this section is not intended to identify key or critical features of the embodiment of the present disclosure, nor is it intended to limit the scope of the present disclosure. Other features of the present disclosure become readily apparent from the following description.


**Brief Description of the Drawings**

The drawings are explanatory and serve to explain the present disclosure, and are not to be construed to limit the present disclosure to the illustrated embodiments.

Fig. 1                     is a block diagram of a conventional video encoder,

Fig. 2                     is a block diagram of a conventional video decoder,

Fig. 3                     illustrates angular Intra Prediction Modes (IPMs) in VVC and ECM,

Fig. 4                     illustrates for a currently processed block of a picture neighboring blocks used in a derivation of a general MPM list,

Fig. 5                     illustrates an example of a derivation of a general MPM list using the L, A, AL, AR and BL neighboring blocks of Fig. 4,

Fig. 6                     illustrates a Low-Frequency Non-Separable Transform (LFNST) process;

Fig. 7                     illustrates a table showing the mapping of intra prediction modes to the LFNST set index;

Fig. 8                     illustrates an SGPM block being split into respective partitions according to certain partition mode;

Fig. 9                     illustrates a plurality of possible partition modes;

Fig. 10(A)-Fig. 10(B)     illustrate the signaling the partition split and the two intra prediction modes for a SGPM block;

Fig. 11                    illustrates a SGPM template used for reordering a candidate list for SGPM;

Fig. 12                    illustrates a PGM blending;

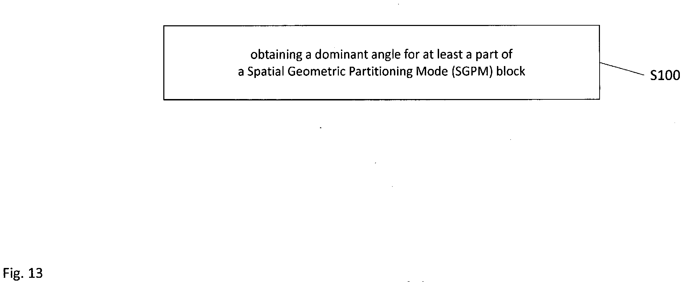

Fig.13                     illustrates a flow diagram of a method of processing one or more blocks of a picture in accordance with embodiments of the present disclosure,

Fig. 14(A)-FIG.14(C)      illustrate an SGPM block with a partition mode 0 and the weights of its two partitions for which a dominant angel is obtained in accordance with embodiments of the present disclosure;

Fig. 15                    illustrates a process to derive a dominant angle based on weights of the predictions in accordance with embodiments of the present disclosure;

Fig. 16                    illustrates an embodiment for determining W0 and W1 in accordance with S204 and S206 in Fig. 15;

Fig. 17(A)-FIG.17(C)      illustrate an SGPM block with a partition mode 51 and the weights of its two partitions for which a dominant angel is obtained in accordance with embodiments of the present disclosure;

Fig. 18                    illustrates a process to derive a sub-dominant angle based on weights of the predictions in accordance with embodiments of the present disclosure;

Fig. 19                    illustrates an embodiment of a currently proceed block with its adjacent blocks coded in SGPM used for determining the sub-dominant angle in accordance with embodiments;

Fig. 20                    illustrates another embodiment of a currently proceed block with its adjacent blocks coded in SGPM which are used for determining the sub-dominant angle;

Fig. 21   illustrates a flow diagram of a method for decoding an encoded data stream in accordance with embodiments of the present disclosure,

Fig. 22   illustrates a flow diagram of a method for encoding a picture into an encoded data stream in accordance with embodiments of the present disclosure,

Fig. 23   illustrates a block diagram of an apparatus of processing one or more blocks of a picture in accordance with embodiments of the present disclosure,

Fig. 24   illustrates a block diagram of a decoder for decoding an encoded data stream in accordance with embodiments of the present disclosure,

Fig. 25   illustrates a block diagram of an encoder for encoding a picture into an encoded data stream in accordance with embodiments of the present disclosure,

Fig. 26   illustrates a data stream in accordance with embodiments of the present disclosure, and

Fig. 27   illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

*Standard Video Coder*

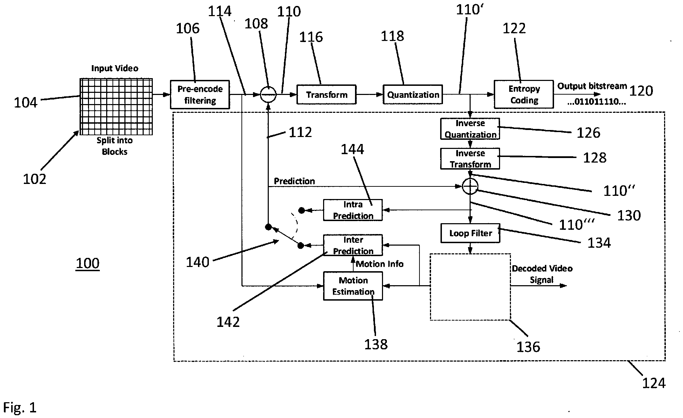

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

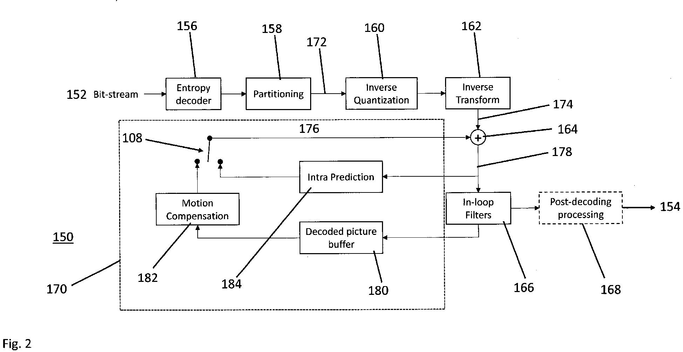

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = \text{Floor}(\text{Log2}(\text{Gx}))$$

$$\text{normDiff} = ((\text{Gx} << 4) >> x) \& 15$$

$$x += (3 + (\text{normDiff} != 0) ? 1 : 0)$$

$$\text{Orient} = (\text{Gy} * (\text{DivSigTable}[\text{normDiff}] | 8) + (1 << (x-1))) >> x$$

where

$$\text{DivSigTable}[16] = \{ 0, 7, 6, 5, 5, 4, 4, 3, 3, 2, 2, 1, 1, 1, 1, 0 \}.$$

For a block of size $W \times H$, the weight for each of the five derived modes is modified if one of the above or left histogram magnitudes is twice as large as the other one. In this case, the weights are location dependent and computed as follows:

If the above histogram is twice the left, then:

$$w_i(x, y) = wDimd_i + \Delta_i - 2\Delta_i \frac{y}{(H-1)}.$$

If the left histogram is twice the above, then:

$$w_i(x, y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.
The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.
Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Angular Intra Prediction Mode (IPM) in VVC and ECM*

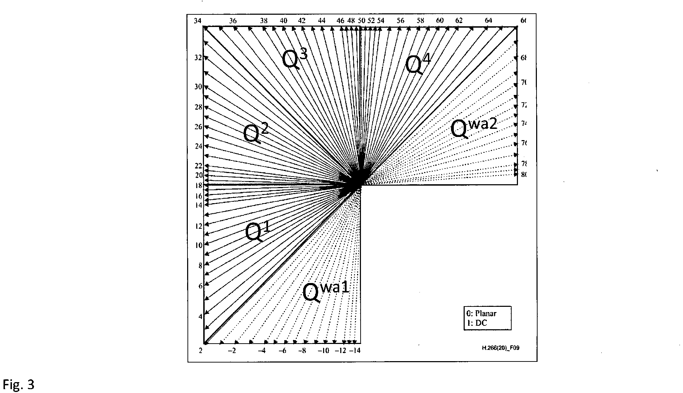

A set of 67 Intra Prediction Modes (IPMs) exists both in VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,....,-1 and 67,68,...,80), depending on block characteristics such as width/height ratio. Fig 3 illustrates angular Intra Prediction Modes (IPMs) in VVC and ECM. In Fig. 3, the solid lines (indices) indicate non-wide-angle IPMs and the dashed lines (indices) indicate wide-angle IPMS. As is show in Fig. 3, the non-wide-angle IPMs cover an angle range of between 45 degrees and 225 degrees, while the wide-angle IPMs extend their extremes by 45 degrees from each side, i.e., cover an angle range between 0 and 45 degrees and between 225 and 270 degrees, respectively. Furthermore, one can divide the set of IPMs into four non-wide-angle quarters or quadrants $Q^1$, $Q^2$, $Q^3$ and $Q^4$ of angular intra prediction directions, as well as two wide-angle quarters or quadrants $Q^{wa1}$ and $Q^{wa2}$ of angular intra prediction directions. Each angular IPM is mapped to or is associated with an intra angle or angular intra prediction direction. The angular intra prediction directions for the non-wide-angle IPMs (IPMs 2 to 66 in Fig. 3) are defined from -135 degrees to +45 degrees in a clockwise direction. For example, IPM 66 extends from a horizontal reference line above a currently processed block and is rotated downwards by - 135 degrees relative to the horizontal reference line in the clockwise direction so as to extend from the horizontal reference line above the currently processed block towards the pixel to be predicted. IPM 2 extends from a vertical reference line left the currently processed block and is rotated downwards by +45 degrees relative to the vertical reference line in the clockwise direction so as to extend from the vertical reference line left of the currently processed block towards the pixel to be predicted.

The angular intra prediction modes may be signaled through a Most Probable Mode (MPM) list and a non-MPM list.

*Most Probable Mode (MPM) and non-MPM lists*

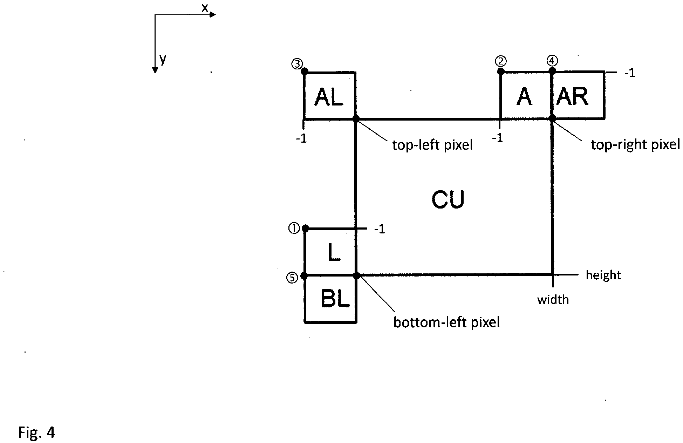

An MPM list may include a primary MPM (PMPM) list comprising 6 entries and a secondary MPM (SMPM) list including 16 entries. A general MPM list with 22 entries is constructed first, and then the first 6 entries in this general MPM list are included into the PMPM list, and the rest of entries of the general MPM list form the SMPM list. The first entry in the general MPM list is the Planar mode. The remaining entries are composed of the intra modes of the left (L), above (A), below-left (BL), above-right (AR), and above-left (AL) neighboring blocks of a currently processed or predicted block and DIMD modes which are sorted in ascending order of Sum of Absolute Difference (SAD) cost. Fig. 4 illustrates for a currently processed block CU the neighboring blocks L, A, BL, AR, AL used in the derivation of the general MPM list. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed.

In this disclosure, the intra modes of the left (L), above (A), below-left (BL), above-right (AR), and above-left (AL) neighboring blocks are also referred to as the first intra prediction modes (IPMs). Further, the above terms left (L), above (A), above-left (AL), above-right (AR) and below-left (BL) are defined as position based on the current block position. The position of the current block is depicted in x, y coordinates with respect to the position of the first pixel, the top-left pixel of the current block, from the current block within the picture. Based on that x, y position of the top-left pixel, offsets are computed to obtain the positions ① to ⑤ of the reconstructed blocks L, A, AL, AR and BL. As may be seen, the reconstructed blocks L, A, AL, AR and BL are all adjacent or abutting respective corners of the currently processed block, more specifically, corners corresponding to the top-left pixel position, the top-right pixel position and the bottom-left pixel position. Relative to the x, y position of the top-left pixel, the offsets of the positions ① to ⑤ are as follows:

> ①: (-1, height - 1),
> ②: (width - 1, -1),
> ③: (-1, -1),
> ④ (width, -1),
> ⑤: (-1, height).

The blocks within these pixel positions are considered as L, A, AL, AR and BL neighboring or adjacent blocks.

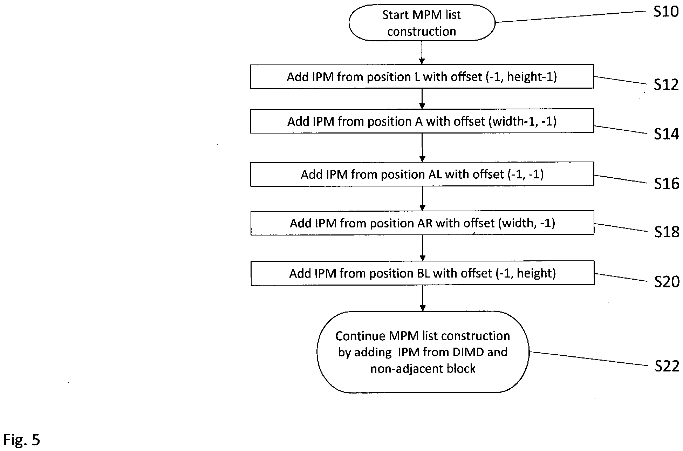

Fig. 5 illustrates an example of the derivation of a general MPM list using the L, A, AL, AR and BL neighboring blocks of Fig. 4. The MPM list construction starts at S10. At S12, the IPM from position ① (L) having the offset (-1, height-1) from the top-left pixel of the current block CU is added.. At S14, the IPM from position ② (A) having the offset (width-1, -1) from the top-left pixel of the current block CU is added. At S16, the IPM from the position ③ AL having the offset (-1, -1) from the top-left pixel of the current block CU is added. At S18, the IPM from position ④ (AR) having the offset (width, -1) from the top-left pixel of the current block CU is added. At S20, the IPM from position ⑤ (BL) having the offset (-1, height) from the top-left pixel of the current block CU is added. Then, at S22, the MPM list construction continues by adding IPMs obtained by DIMD and IPMs from non-adjacent block(s). Based on the general MPM list, a non-MPM list is constructed with the remaining IPMs.

*Transform coding in VVC*

In VVC, large block-size transforms, up to $64 \times 64$ in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a $M \times N$ transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

Multiple transform selection (MTS) for core transform

In addition to DCT-II which has been employed in HEVC, a Multiple Transform Selection (MTS) scheme is used for residual coding both inter and intra coded blocks. It uses multiple selected transforms from the DCT8/DST7. The transform matrices are DST-VII and DCT-VIII. The table below shows the basis functions of the selected DST/DCT.

| Transform Type | Basis function $T_i(j)$, $i, j = 0, 1,..., N\text{-}1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ $$\omega_0 = \begin{cases} \sqrt{\frac{2}{N}} & i = 0 \\ 1 & i \neq 0 \end{cases}$$ where, |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

Transform basis functions of DCT-II/ VIII and DSTVII for N-point input

In order to keep the orthogonality of the transform matrix, the transform matrices are quantized more accurately than the transform matrices in HEVC. To keep the intermediate values of the transformed coefficients within the 16-bit range, after horizontal and after vertical transform, all the coefficients are to have 10-bit.
In order to control the MTS scheme, separate enabling flags are specified at the Sequence Parameter Set (SPS) level for intra and inter, respectively. When MTS is enabled at SPS, a CU level flag is signaled to indicate whether MTS is applied or not. MTS may be applied only for luma. The MTS signaling is skipped when one of the below conditions is applied.

- The position of the last significant coefficient for the luma transform block (TB) is less than 1, i.e., DC only.
- The last significant coefficient of the luma TB is located inside the MTS zero-out region.

If a MTS CU flag is equal to zero, then DCT2 is applied in both directions. However, if the MTS CU flag is equal to one, then two other flags are additionally signaled to indicate the transform type for the horizontal and vertical directions, respectively. A transform and signaling mapping table is shown below. A unified transform selection for intra sub-partitions (ISP) and an implicit MTS is used by removing the intra-mode and block-shape dependencies. If a current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

| MTS_CU_flag | MTS_Hor_flag | MTS_Ver_flag | Intra/inter | |
|---|---|---|---|---|
| | | | Horizontal | Vertical |
| 0 | | | DCT2 | |

(continued)

| MTS_CU_flag | MTS_Hor_flag | MTS_Ver_flag | Intra/inter | |
|---|---|---|---|---|
| | | | Horizontal | Vertical |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |
| Transform and signaling mapping table | | | | |

To reduce the complexity of large size DST-7 and DCT-8 blocks, high frequency transform coefficients are zeroed out for the DST-7 and DCT-8 blocks with a size (width or height, or both width and height) equal to 32. Only the coefficients within the 16x16 lower-frequency region are retained.

As in HEVC, the residual of a block may be coded using a transform skip mode. To avoid a redundancy of syntax coding, the transform skip flag is not signaled when the CU level MTS_CU_flag is not equal to zero. An implicit MTS transform is set to DCT2 when a low-frequency non-separable transform (LFNST) or a matrix-based intra prediction (MIP) is activated for the current CU. Also the implicit MTS may be still enabled when MTS is enable for inter coded blocks.

Low-frequency non-separable transform (LFNST)

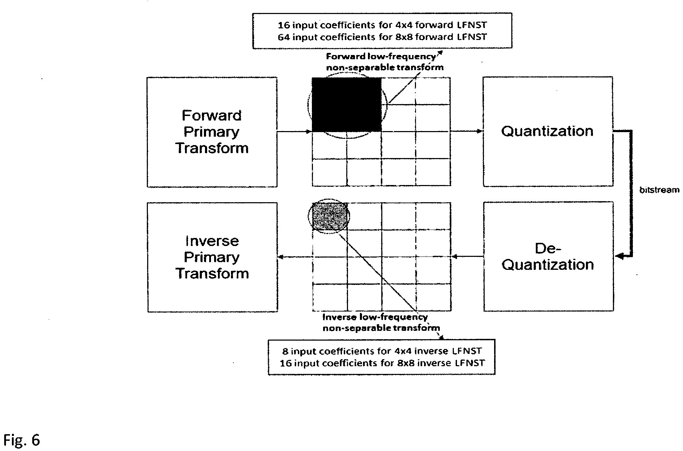

In VVC, LFNST is applied between the forward primary transform and the quantization (at encoder) and between the de-quantization and the inverse primary transform (at decoder side) as shown in Fig. 6. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:

To apply a 4x4 LFNST, the 4x4 input block X

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector $\vec{X}$ :

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^T$$

The non-separable transform is obtained as $\vec{F} = T \cdot \vec{X}$ , where $\vec{F}$ indicates the transform coefficient vector, and T is a 16x16 transform matrix. The 16x1 coefficient vector $\vec{F}$ is subsequently re-organized as 4x4 block using the scanning order for that block (horizontal, vertical or diagonal). The coefficients with smaller index are placed with the smaller scanning index in the 4x4 coefficient block.

LFNST transform selection

In total, there are 4 transform sets, and 2 non-separable transform matrices (kernels) per transform set are used in LFNST. The mapping from the intra prediction mode to the transform set is pre-defined as shown in the table below. If one of three Cross-Component Linear Model (CCLM) modes (INTRA_LT_CCLM, INTRA_T_CCLM or INTRA_L_CCLM) is used for the current block (81 <= predModeIntra <= 83), transform set 0 is selected for the current chroma block. For each transform set, the selected non-separable secondary transform candidate is further specified by the explicitly signaled LFNST index. The index is signaled in a bit-stream once per Intra CU after the transform coefficients.

| IntraPredMode | Transform set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |
| Transform selection table | |

*Transform coding in Enhanced Compression Model (ECM)*

Enhanced MTS for intra coding

In the current VVC design, for MTS, only DST7 and DCT8 transform kernels are utilized which are used for intra and inter coding.

Additional primary transforms including DCT5, DST4, DST1, and an identity transform (IDT) are employed. Also, a MTS set is made dependent on the TU size and intra mode information. For blocks predicted via an intra template matching prediction (IntraTMP), a Decoder side intra mode derivation (DIMD) process is used on the prediction block to derive an intra mode that is used for the transform selection. Specifically, a horizontal gradient and a vertical gradient are obtained for each predicted sample to build a histogram of gradients (HoG). Then the intra prediction mode with the largest histogram amplitude values is used to select the MTS transform set.

Overall, 16 different TU sizes are considered, and for each TU size 5 different classes are considered depending on intra-mode information. For each class, 1, 4 or 6 different transform pairs are considered. The number of intra MTS candidates are adaptively selected (between 1, 4 and 6 MTS candidates) depending on the sum of absolute value of the transform coefficients. The sum is compared against two fixed thresholds to determine the total number of allowed MTS candidates:

1 candidate: sum <= th0
4 candidates: th0 < sum <= th1
6 candidates: sum > th1

Although a total of 80 different classes are considered, some of the different classes often share exactly the same transform set. So there are 58 (less than 80) unique entries in the resultant look-up-table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

Secondary Transformation: LFNST extension with large kernel

The LFNST design in VVC is extended as follows:

- The number of LFNST sets (S) and candidates (C) are extended to S=35 and C=3, and the LFNST set (lfnstTrSetIdx) for a given intra mode (predModeIntra) is derived according to the following formula:

  ○ For predModeIntra < 2, lfnstTrSetIdx is equal to 2
  o lfnstTrSetIdx = predModeIntra, for predModeIntra in [0,34]
  ○ lfnstTrSetIdx = 68 - predModeIntra, for predModeIntra in [35,66]

- Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

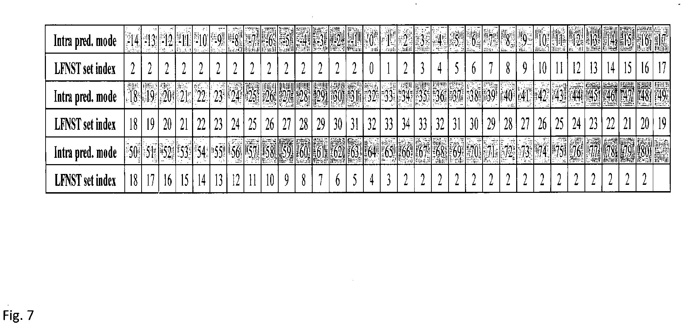

The mapping from intra prediction modes to these sets is shown in the Table illustrated in Fig. 7.

For blocks using MIP or IntraTMP prediction, the LFNST set index is derived as follows. DIMD is used to derive the intra prediction mode of the current block based on the MIP or IntraTMP predicted samples. For MIP, this is done before upsampling. Specifically, a horizontal gradient and a vertical gradient are calculated for each predicted sample to build a HoG. Then the intra prediction mode with the largest histogram amplitude values is used to determine the LFNST transform set and LFNST Transpose flag.

For blocks using Spatial Geometric partitioning mode (SGPM=, the LFNST set index is defined based on a default intra prediction mode. This default intra prediction mode is derived from an SGPM default list in relation to the partition mode.

*Spatial Geometric partitioning mode (SGPM)*

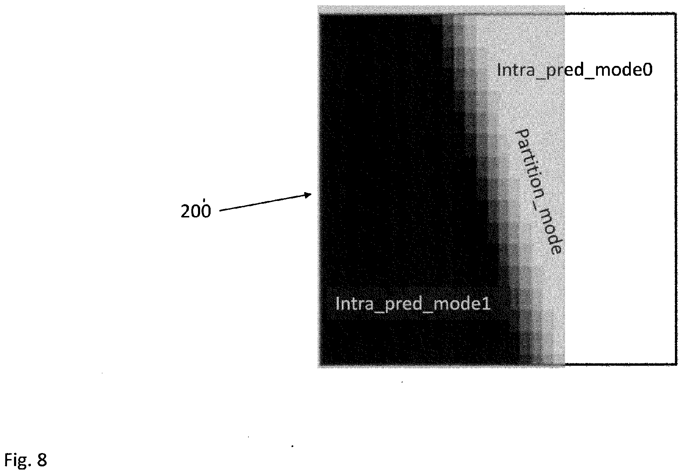

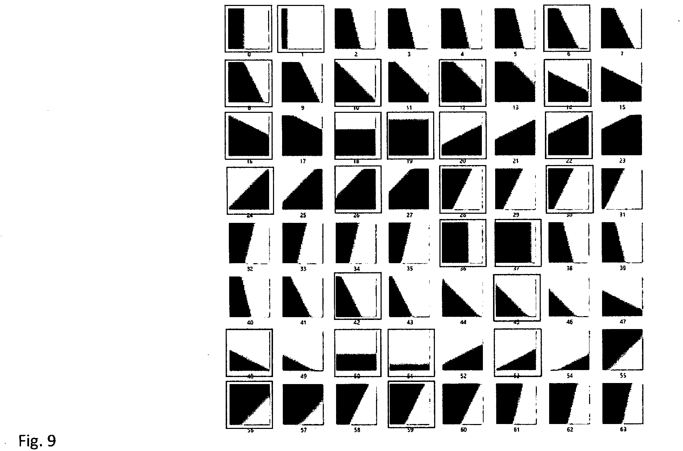

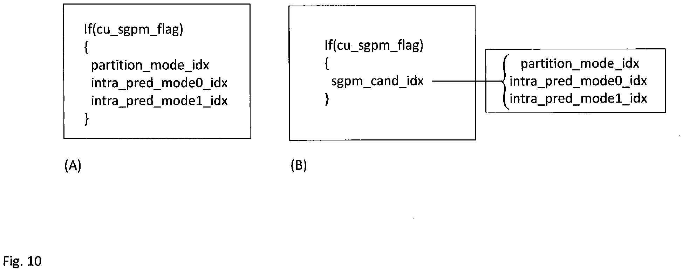

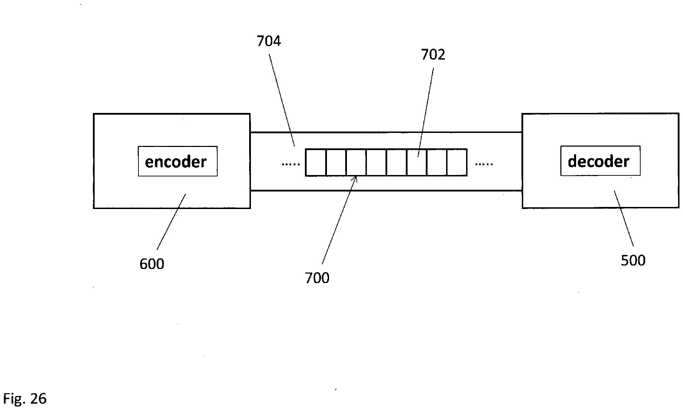

SGPM is an intra mode that resembles the inter coding tool of the Geometric Partitioning Mode (GPM), where the two prediction parts are generated from an intra predicted process. In this mode, a candidate list is built with each entry containing one partition split and two intra prediction modes. Fig. 8 illustrates an SGPM block 200 being split into partition 0 and partition 1 according to certain partition mode. Each partition has associated there with a prediction mode, like the IPM intra_pred_mode0 for partition 0, and the IPM intra_pred_mode1 for partition 1. Among a plurality of partition modes illustrated in Fig. 9, 26 partition may be used for SGPM (see the modes surrounded by the squares), namely partition modes 0, 1, 6, 8, 10, 12, 14, 16, 18, 19, 20, 22, 24, 26, 28, 30, 36, 37, 42, 43, 48, 50, 51, 53, 56, 59. The 26 partition modes and 3 of intra prediction modes are used to form the candidate list of combinations. The length of the candidate list may be set 16. Fig. 10(A) and Fig. 10(B) illustrate the signaling the partition split and the two intra prediction modes for a SGPM block. When SGPM is used for processing a current block or CU, the flag cu_sgpm_flag is set, e.g., in a data stream or bitstream. As is illustrated in the example of Fig. 10(A), responsive to the flag cu_sgpm_flag being set, the partition mode partition_mode_idx, the IPM intra_pred_mode0 for partition 0, and the IPM intra_pred_mode1 for partition 1 are signaled for the SGPM block 200. In the example of Fig. 10(B), responsive to the flag cu_sgpm_flag being set, rather than signaling the partition mode partition_mode_idx, the IPM intra_pred mode0 for partition 0, and the IPM intra_pred_mode1 for partition 1 are signaled, a selected index spqm_cand_idx of the candidate list is signaled. The indexed candidate list entry holds for the SGPM block 200 the partition mode partition_mode_idx, the IPM intra_pred_mode0 for partition 0, and the IPM intra_pred_mode1 for partition 1.

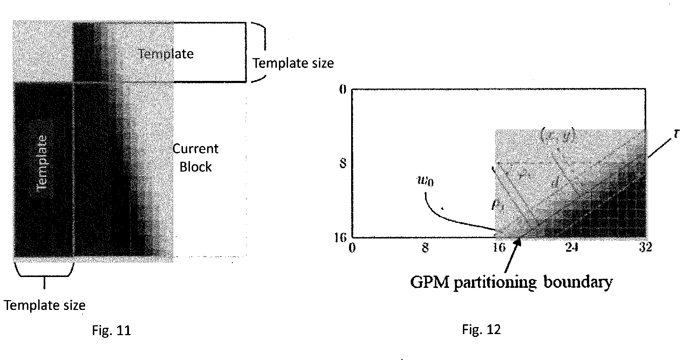

The candidate list may be reordered using a template (see Fig. 11) where a SAD between the prediction and reconstruction of the template is used for ordering. The template size is fixed to 1.

For each partition mode, an IPM list is derived for each part using the same intra-inter GPM list derivation. The IPM list size is set to 3. In the list, a TIMD derived mode is replaced by 2 derived modes with horizontal and vertical orientations.

The SGPM mode may be applied with a restricted blocks size: 4<=width<=64, 4<=height<=64, width<height*8, height<width*8, width*height>=32.

A Picture Parameter Set (PPS) flag may be coded to indicate whether no blending of two intra predictions is allowed. When the PPS flag is set to false, the following adaptive blending is also used for spatial GPM, with the blending depth $\tau$ shown in Fig. 12 being derived as follows:

- If min(width, height)==4, 1/2 $\tau$ is selected
- else if min(width, height)=8, $\tau$ is selected
- else if min(width, height)==16, 2 $\tau$ is selected
- else if min(width, height)==32, 4 $\tau$ is selected
- else, 8 $\tau$ is selected.

Otherwise (the PPS flag is set to true), 1/4 $\tau$ is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

*Dominant angle derivation for SGPM*

As described above, during an encoding process, multiple candidates of primary and secondary transforms are evaluated. The candidates are different depending on the transform set. A transform set is selected using a combination between Transform Unit (TU) size and an intra mode prediction. During a SGPM prediction, a fusion of two predictions is performed with two different intra prediction modes. However, only one intra mode is used to derive the transform set. In the current version of ECM, i.e., ECM 14, the intra mode is derived with a default list of angles based on the SGPM partition mode. However, having a default angle may be sub-optimal when a majority of the block is coded with a different selected angle.

During an encoding process, a chroma block may use a co-located luma block in order to derive and exploit an intra prediction mode. However, when the co-located luma block is coded with SGPM, always the angle selected for the prediction of partition 0 of the SGPM block is used or derived, even if the SGPM block is coded in its majority with the prediction of partition 1. This may lead to a less accurate intra prediction mode.

During an encoding process, an MPM list may be constructed. When a reference block is used to construct the MPM list and this block is coded with SGPM, the default angle is selected. As during the transform selection, this default angle might be sub-optimal.

Thus, in a state-of-the-art process using SGPM blocks a fixed, predefined or default angle for the prediction mode is used for different aspects of the process using, e.g., the Enhanced Compression Model (ECM). For example, for a transform selection, a co-located luma block for chroma prediction or a MPM list construction, conventionally, only one intra mode is used which, however, is always the intra mode associated with a default angle of the SGPM. For the transform selection this may be sub-optimal when a majority of the block is coded with a different selected angle, for the chroma prediction it may lead to a less accurate intra prediction mode, and the MPM list construction may be sub-optimal when a majority of the block is coded with a different selected angle. The transform selection may lead to the selection of a less optimal or suitable transform, when a majority of the SGPM block is coded using a prediction mode associated with an angle different from the default angle. For the chroma prediction it may lead to a less accurate intra prediction mode. The MPM list construction may include less optimal or suitable prediction modes, when a majority of the SGPM block is coded using a prediction mode associated with an angle different from the default angle.

Embodiments of the present disclosure address the above shortcomings in the prior art by providing a dominant angle derivation for SGPM which may be used for other processes, like the transform selection, co-located luma derivation for chroma and the MPM list construction. The dominant angle may be determined from the entire SGPM block or from only a part of the SGPM block. In the latter case, the dominant angle is also referred to herein as a sub-dominant angle.

The present disclosure is advantageous because, other than in conventional approaches using the default angle, obtaining the dominant angle for the SGPM block provides for an improved or more optimal processing, e.g., a better or improved transform selection, a better or improved co-located luma derivation for chroma and a better or improved MPM list construction, thereby improving the performance of the process.

Fig. 7 illustrates a flow diagram of an embodiment of a method of processing one or more blocks of a picture. The method includes:

S100: Obtaining a dominant angle for at least a part of a Spatial Geometric Partitioning Mode (SGPM) block.

In accordance with embodiments of the present disclosure, a representative intra mode prediction for a SGPM block is determined. The prediction of the SGPM block is carried using two predictions that are fused based on the partition mode. These two predictions have different intra modes, however certain processes, like in transform selection, co-located luma derivation for chroma and MPM list construction, only one representative intra mode needs to be provided. The SGPM representative intra mode in accordance with the present disclosure is called the dominant angle. The dominant angle which is defined based on the proportion of its prediction within the block will be used in different aspects of the ECM, e.g., for the transform selection, or for the co-located luma block for chroma prediction, or for the MPM list construction.

While the above mentioned dominant angle is obtained or computed from the entire SGPM block, other embodiments of the present disclosure provide another SGPM representative intra mode referred to herein as a sub-dominant angle. The sub-dominant angle is computed as the dominant angle, but, with a specific starting position and size inside the SGPM block.

Thus, in accordance with embodiments, the present disclosure obtains or computes a dominant angle from the entire SGPM block to obtain a representative angle of an SGPM block.

In accordance with embodiments of the present disclosure, if the dominant prediction is Block-Vector- based (BV-based), the dominant angle may be defined as an angle from a non-dominant prediction.

In accordance with embodiments of the present disclosure, if the dominant prediction is BV-based, the dominant angle may be defined or obtained from a texture analysis method applied on the dominant prediction.

In accordance with embodiments of the present disclosure, the dominant angle is used to select a primary and a secondary transform set.

In accordance with embodiments of the present disclosure, the dominant angle is used during a chroma process to derive the chroma mode.

In accordance with embodiments of the present disclosure, the dominant angle is used during an MPM construction, if the block is non-adjacent to the current block.

In accordance with other embodiments, the present disclosure obtains or computes a dominant angle from only a part of the SGPM block. The dominant angle obtained or computed from only the part of the SGPM block is referred to herein also as a sub-dominant angle, and the sub-dominant angle is obtained or computed to obtain a representative angle of a part of the SGPM block.

In accordance with embodiments of the present disclosure, if the sub-dominant prediction is BV-based, the sub-dominant angle may be defined as an angle from a non-sub-dominant prediction.

In accordance with embodiments of the present disclosure, if the sub-dominant prediction is BV-based, the sub-dominant angle may be defined from a texture analysis method applied on the sub-dominant prediction.

In accordance with embodiments of the present disclosure, the sub-dominant angle is used during an MPM construction based on a position of the current block with the adjacent block used as a reference.

In accordance with embodiments of the present disclosure, both the angles from the prediction of a partition 0 and the prediction of a partition 1 of the SGPM block may be used during the MPM construction. For example, both angles could be added to the MPM list construction of a future block in the same color channel or in a different channel for example in a co-located chroma channel.

*SGPM dominant prediction and angle*

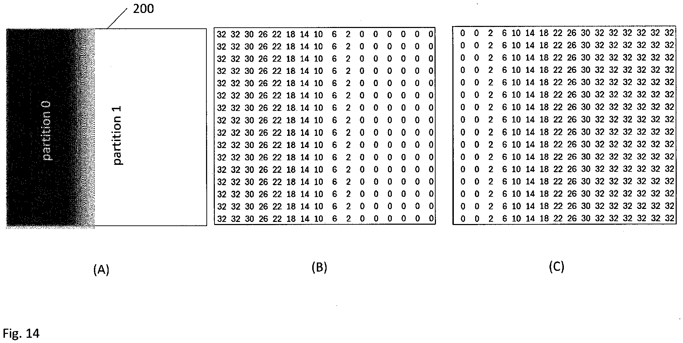

As described above, a SGPM block is divided into two sub-blocks based on the partition mode. Two predictions are performed using the intra prediction mode of partition 0 and the intra prediction mode of partition 1. The two predictions are merged using specific weights. The weights may be dependent of the block size and the partition mode. In this disclosure, the dominant prediction is defined as the SGPM prediction with the highest sum of weights in the SGPM block, and the dominant angle is defined herein as the angle corresponding to or associated with the dominant prediction. Fig. 14 illustrates an SGPM block 200 having a size (width $\times$ height) of $16 \times 16$ pixel. Fig. 14(A) illustrates the partition mode of the SGPM block 200. In the depicted embodiment, the SGPM block has a partition mode 0 (see Fig. 9). Fig. 14(B) illustrates the weights applied to the prediction of partition 0, and Fig. 14(C) illustrates the weights applied to the prediction of partition 1. As may be seen, in the depicted embodiment, the maximum weight assigned to a pixel is 32, the minimum weight assigned to a pixel is 0, and the weights are distributed among the pixels such that for each pixel of the SGPM block, the sum of the weights of the first and second partitions are equal to the maximum weight, e.g., 32. Thus, Fig. 14 illustrates an embodiment of an SGPM block with a partition mode equal to 0 for a block of size 16x16. Fig. 14(A) represents the SGPM partition mode 0 (with a prediction of partition 0 in black and a prediction of partition 1 in white), Fig. 14(B) represents the weights of each pixel for the prediction of partition 0, and Fig. 14(C) represents the weights for each pixel of the prediction of partition 1. During the SGPM process, the two predictions are combined according to the weights of each pixel.

In order to determine which prediction is the dominant one, the weights of each pixel inside the SGPM block are summed for both the prediction of partition 0 and the prediction of partition 1. Then, the prediction with the highest sum of weights, i.e. the prediction with the highest proportion inside the block, is defined as the dominant prediction. The dominant angle is defined as the angle used for or associated with the dominant prediction. The dominant angle is defined herein also as the SGPM representative mode.

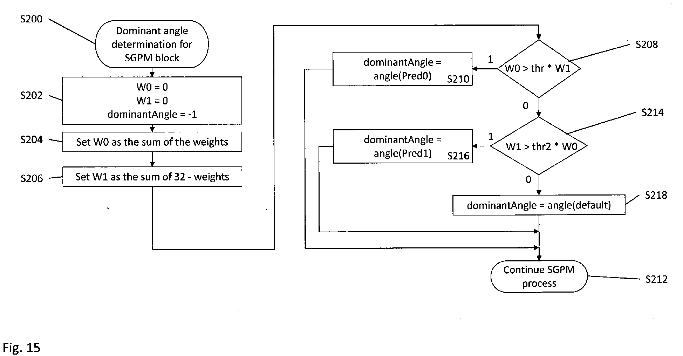

In the embodiment of Fig. 14, for the 16x16 SGPM block the dominant prediction is the prediction of partition 1. The dominant angle will be the angle used to predict the prediction of partition 1. Fig. 15 illustrates an embodiment of a process to derive a dominant angle based on weights of the predictions in accordance with the present disclosure. At S200, the process starts to derive the dominant angle based on the weights of each prediction within the SGPM block. W0 is defined as the sum of the weights applied to the prediction of partition 0 and W1 is defined as the sum of the weights applied to the prediction of partition 1. The matrix of weights (see Fig. 14) are the weights applied to the prediction of partition 0. At S202 W0 and W1 are set to 0, and the value dominantAngle is set to -1. At S204 W0 is determined, and at S206 W1 is determined. At S208 it is determined whether W0 is greater than W1 multiplied by the threshold thr. If yes ("1"), the dominant angle is determined S210 to be the angle associated with the prediction of partition 0, and the SGPM process continues S212. If no ("0"), it is determined S214 whether W1 is greater than W0 multiplied by the threshold thr2. If yes ("1") the dominant angle is determined S216 to be the angle associated with the prediction of partition 1, and the SGPM process continues S212. If no ("0"), the dominant angle is determined S218 to be the default angle, and the SGPM process continues S212.

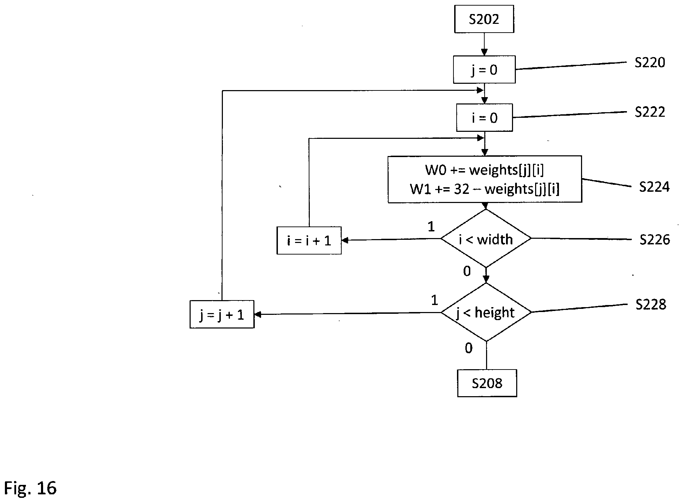

Fig. 16 illustrates an embodiment for determining W0 and W1 in accordance with S204 and S206 in Fig. 15. As S220 and S222 the counter j for the height of the SGPM block and the counter I for the width of the SGPM block are set to zero. At S224, W0 is increased by the weight at pixel (j, i), and W1 is increased by *max_weight* -the weight at pixel (j, i), e.g., in case of Fig. 14 W1=31-weight[j][i]. At S224 it is determined whether the counter i is less than the width of the block. If yes ("1"), the counter i is incremented and S224 is repeated. If no ("0") it is determined at S228 whether the counter j is less than the height of the block. If yes ("1"), the counter j is incremented, the counter i is reset and the process proceeds with S224. If no ("0"), the process proceeds to S208 of Fig. 15 using W0 and W1 as determined by S224.

Thus, in accordance with embodiments, the dominant angle is defined as

- the angle from prediction of partition 0 if the sum of the weight W0 is superior to W1 multiplied by thr, or
- the angle from prediction of partition 1 if the sum of the weight W1 is superior to W0 multiplied by thr2, or
- the default angle if the two previous conditions are not satisfied.

The thresholds thr and thr2 may be defined with either the same or different values. As an example, both thr and thr2 may be equal to 1.5.

In accordance with embodiments, the comparison between W0 and W1 may be simplified. For instance, *thr* * *W*1 and/or or *thr*2 * *W*0 may be determined or computed as

$$thr * W1 = \frac{(thr * width * height * max\_weight)}{(1 + thr)}$$

$$thr2 * W0 = \frac{(thr2 * width * height * max\_weight)}{(1 + thr2)}$$

with *max_weight* being the a highest weight, like 32 in Fig. 14.

In accordance with yet other embodiments, for simplifying the process, the values for *thr* * *W*1 and/or or *thr*2 * *W*0 may be obtained, e.g., from a look-up table. The look-up table may hold the values based on the block size, thereby reducing the computational complexity.

In accordance with further embodiments, the process may be simplified by defining a look-up table to determine the most dominant prediction based on the block size and a partition mode thereby reducing the computational complexity.

In accordance with embodiments, for the SGPM block one partition may be predicted by a Block Vector (BV) rather than by an IPM (e.g. IntraTmp). If the partition predicted by BV is selected as the dominant prediction, there is no IPM associated with the partition to be used as the SGPM representative intra mode. In such cases, the dominant angle of the BV-based prediction may be derived by applying a texture analysis method, such as DIMD, on the corresponding prediction samples.

In accordance with other embodiments, if the dominant angle is from a BV-based prediction part, it may be replaced either by an angle from the other prediction (i.e., a non BV-based prediction) or by the default angle determined based on the SGPM partition mode.

Transform selection

As described above, in ECM, the primary and secondary transforms may be applied if some conditions are satisfied. Multiple sets of primary and secondary transforms exist with several candidates per set. Those sets are pre-determined based on the block size and the intra mode prediction. Currently, in ECM 14, for SGPM blocks, the intra mode prediction is derived from a default angle list based on the partition mode. In accordance with embodiments of the present disclosure, rather than using a default angle, the dominant angle is prevailed or used as the representative intra mode for the SGPM block. In accordance with embodiments, the dominant angle of the SGPM block, which is computed or determined as described above, may be used. Then the IPM associated with the dominant angle along with the TU size may be used to select the transform set and apply the existing transform selection scheme for intra blocks.

Chroma derivation from co-located luma block

Chroma samples may rely on luma samples for its prediction, e.g., in cross-component prediction modes. Furthermore, the chroma modes may be derived from the co-located luma blocks. If the co-located luma block is an SGPM block, then, conventionally, the angle derived, e.g., in existing methods in ECM, is the angle from the prediction of partition 0. However, the prediction of partition 0 may have had a minor contribution to the prediction of the co-located luma block. Therefore, in accordance with embodiments, the partition that is associated with the SGPM dominant intra mode is used. In other words, in order to use the angle with the highest proportion in the SGPM mode, the chroma process will derive from the SGPM co-located luma block the dominant angle.

MPM list construction with dominant angle from SGPM

During a MPM list construction, information from neighbor blocks is derived. When a neighbor block is coded with SGPM, state-of-the-art processes using, e.g., ECM, use the default mode from of SGPM which is added to the MPM list. However, this default mode is pre-determined in relation to the partition mode selected and may not be optimal. In order to have a more representative angle, in accordance with embodiments, when a non-adjacent block is coded with SGPM and used during the MPM list construction of a currently processed block, the dominant angle may be used as there are no common borders between the current block and the non-adjacent SGPM block.

*SGPM sub-dominant prediction and sub-dòminant angle*

In accordance with embodiments, a sub-dominant prediction is computed as the dominant prediction with a specific starting position and size inside the block. The sub-dominant angle is determined according to the intra mode prediction selected by the sub-dominant prediction. The specific starting position and size may be different regarding the usage of the sub-dominant angle.

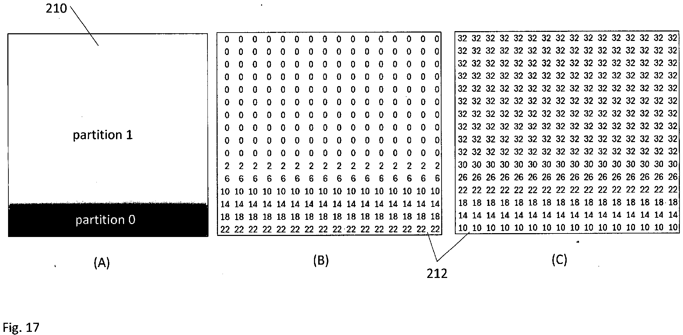

Fig. 17 illustrates an SGPM block 210 having a size (width $\times$ height) of 16 $\times$ 16 pixel. Fig. 17(A) illustrates the partition mode of the SGPM block 200. In the depicted embodiment, the SGPM block has a partition mode 51 (see Fig. 9). Fig. 17(B) illustrates the weights applied to the prediction of partition 0, and Fig. 17(C) illustrates the weights applied to the prediction of partition 1. As may be seen, in the depicted embodiment, the maximum weight assigned to a pixel is 32, the minimum weight assigned to a pixel is 0, and the weights are distributed among the pixels such that for each pixel of the SGPM block, the sum of the weights of the first and second partitions are equal to the maximum weight, e.g., 32. Thus, Fig. 17 illustrates an embodiment of an SGPM block with a partition mode equal to 0 for a block of size 16x16. Fig. 17(A) represents the SGPM partition mode 51 (with a prediction of partition 0 in black and a prediction of partition 1 in white), Fig. 17(B) represents the weights of each pixel for the prediction of partition 0, and Fig. 14(C) represents the weights for each pixel of the prediction of partition 1. During the SGPM process, the two predictions are combined according to the weights of each pixel. In this embodiment, only the bottom row 212 is used to determine the sub-dominant prediction.

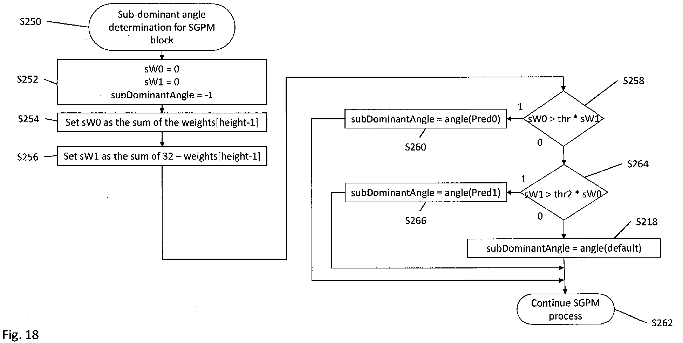

In the embodiment of Fig. 17, for the 16x16 SGPM block the sub-dominant prediction is the prediction of partition 0. The sub-dominant angle will be the angle used to predict the prediction of the bottom roe of partition 1. Fig. 18 illustrates an embodiment of a process to derive a sub-dominant angle based on weights of the predictions in accordance with the present disclosure. At S250, the process starts to derive the sub-dominant angle based on the weights of each prediction within the SGPM block. sW0 is defined as the sum of the weights of the bottom row applied to the prediction of partition 0 and sW1 is defined as the sum of the weights of the bottom row applied to the prediction of partition 1. The matrix of weights (see Fig. 17) are the weights applied to the prediction of partition 0. At S252 sW0 and sW1 are set to 0, and the value subDominantAngle is set to -1. At S254 sW0 is determined, and at S256 sW1 is determined. At S258 it is determined whether sW0 is greater than sW1 multiplied by the threshold thr. If yes ("1"), the sub-dominant angle is determined S260 to be the angle associated with the prediction of partition 0, and the SGPM process continues S262. If no ("0"), it is determined S264 whether sW1 is greater than sW0 multiplied by the threshold thr2. If yes ("1") the dominant angle is determined S266 to be the angle associated with the prediction of partition 1, and the SGPM process continues S262. If no ("0"), the dominant angle is determined S268 to be the default angle, and the SGPM process continues S262.

In accordance with embodiments, sW0 and sW1 may be determined is a way as described with reference to Fig. 16, except that in S226 and S228 the final values of the counters i, j are set according to the region of the SGPM block 210 from which the sub-dominant angle is determined. In the embodiment of Fig. 17 using only the bottom row, this means that the final value for the counter j = 0 (only one row is used), while the final value for the counter i is set to width (all pixels of the row are used).

Thus, in accordance with embodiments, the dominant angle is defined as

-    the angle from the prediction of partition 0 if the sum of the weight sW0 is superior to sW1 multiplied by thr, or
-    the angle from prediction of partition 1 if the sum of the weight sW1 is superior to sW0 multiplied by thr2, or
-    the default angle if the two previous conditions are not satisfied.

In the embodiment of Fig. 17, the sum of the weights from sub-prediction of partition 0 is higher than the sum of the weights of the sub-prediction of partition 1 which means that the sub-prediction of partition 0 is identified as the sub-dominant prediction, and the angle used for prediction of partition 0 is defined as the sub-dominant angle.

The thresholds thr and thr2 may be defined with either the same or different values. As an example, both thr and thr2 may be equal to 1.5.

In accordance with embodiments, the comparison between sW0 and sW1 may be simplified. For instance, $thr * sW1$ and/or or $thr2 * sW0$ may be determined or computed as

$$thr * sW1 = \frac{(thr * width * height * max\_weight)}{(1 + thr)}$$

$$thr2 * sW0 = \frac{(thr2 * width * height * max\_weight)}{(1 + thr2)}$$

with *max_weight* being the a highest weight, like 32 in Fig. 14.

In accordance with yet other embodiments, for simplifying the process, the values for *thr \* sW*1 and/or or *thr2 \* sW*0 may be obtained, e.g., from a look-up table. The look-up table may hold the values based on the block size, thereby reducing the computational complexity.

In accordance with further embodiments, the process may be simplified by defining a look-up table to determine the most dominant prediction based on the block size and a partition mode thereby reducing the computational complexity.

In accordance with embodiments, for the SGPM block one partition may be predicted by a Block Vector (BV) rather than by an IPM (e.g. IntraTmp). If the partition predicted by BV is selected as the dominant prediction, there is no IPM associated with the partition to be used as the SGPM representative intra mode. In such cases, the dominant angle of the BV-based prediction may be derived by applying a texture analysis method, such as DIMD, on the corresponding prediction samples.

In accordance with other embodiments, if the dominant angle is from a BV-based prediction part, it may be replaced either by an angle from the other prediction (i.e., a non BV-based prediction) or by the default angle determined based on the SGPM partition mode.

The embodiment described above used only the bottom row for determining the sub-dominant angle. The present invention is not limited to such embodiments. In accordance with other embodiments, more than one row, e.g., a plurality of rows adjacent to the bottom of the SGPM block may be used. In accordance with yet other embodiments, in addition to or instead of the one or more rows, one or more columns, e.g., one or more columns adjacent to the right edge SGPM block, may be used for determining the sub-dominant angle. Thus, while the embodiment of Fig. 17 and Fig. 18 focuses on the bottom row, this may be reproduced for any other specific starting position and size of a block. When determining or computing the sub-dominant prediction for the right column, then only the weights from the right column are be used to determine sW0 and sW1.

Transform selection with sub-dominant angle from SGPM

In case the sub-dominant angle is used in transform selection, it may be used as an alternative approach for the transform selection in addition to the dominant angle. In this case, the encoder may try both and pick the best performing one via a rate-distortion optimization. A flag may be signaled in the bitstream to indicate to the decoder which one of the dominant angle or sub-dominant angle is used.

Chroma derivation from co-located luma block with sub-dominant angle from SGPM

In case the sub-dominant angle is used in intra mode derivation of a co-located luma block, the sub-dominant angle may be added to the MPM list construction of the chroma block.

MPM list construction with sub-dominant angle from SGPM

During a MPM list construction, information from neighbor blocks is derived. When a neighbor block is coded with SGPM, the state-of-the-art processes according to, e.g., the ECM, uses the default mode from of SGPM which is added to the MPM list. However, this default mode is pre-determined in relation to the partition mode selected and may not be optimal. In order to have a more representative angle, the sub-dominant angle based on the position of the adjacent block compared to the current block is computed and defined as the representative SGPM angle mode.

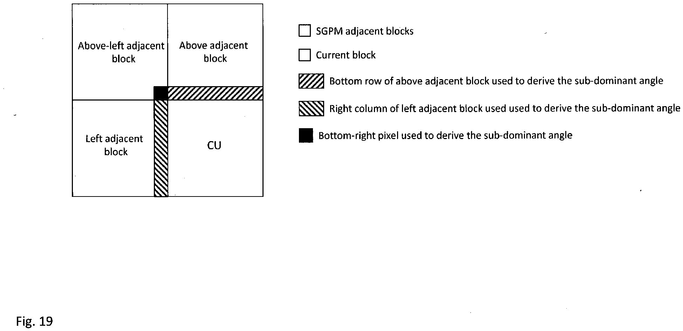

Fig. 19 illustrates an embodiment of a currently proceed block with its adjacent blocks coded in SGPM used for determining the sub-dominant angle in accordance with embodiments. Fig. 19 depicts the current block CU and some of the blocks defined as adjacent which are coded with SGPM, namely the top or above adjacent block, the left adjacent block and the above-left adjacent block. Further, the last or bottom row of the above adjacent block is depicted that is used to derive its sub-dominant prediction and sub-dominant angle. The last or right-most column of the left adjacent block is depicted that is used to derive its sub-dominant prediction and sub-dominant angle. The bottom right pixel of the above-left or top-left adjacent block is depicted that is used to derive its sub-dominant prediction and sub-dominant angle.

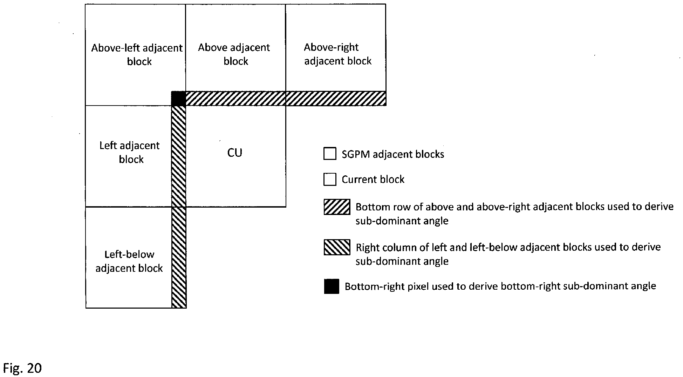

In accordance with other embodiments, the sub-dominant prediction may be obtained or computed using a different starting position and size in relation to the position of the adjacent block compared to the current block. Fig. 20 illustrates another embodiment of a currently proceed block with its adjacent blocks coded in SGPM which are used for determining the sub-dominant angle. In the embodiment of Fig. 20, in addition to the bottom row of the above adjacent block and the right column of left adjacent block, also the bottom row of the above-right adjacent block and the right column of left-bottom adjacent block are used for deriving a sub-dominant prediction and sub-dominant angle.

Thus, in accordance with embodiments, once the position of the adjacent block compared to the current block is determined, the starting position and the size of the part of one or more adjacent SGPM coded blocks may be defined to determine or compute the sub-dominant prediction of the adjacent block. The angle from the sub-dominant prediction is defined as the sub-dominant angle, and the sub-dominant angle is added to the MPM list.

*Decoding Method*

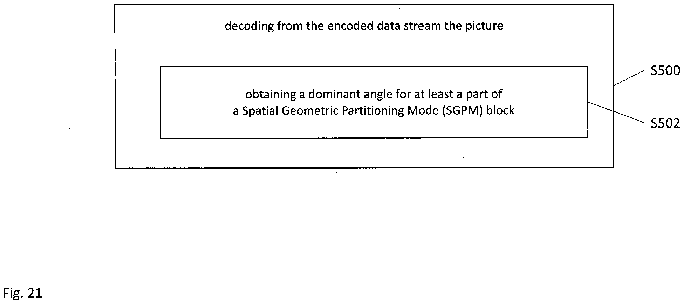

Fig. 21 illustrates a flow diagram of a method for decoding an encoded data stream, the encoded data stream including data representing a picture. The method includes the following:
S500: Decoding from the encoded data stream the picture, wherein decoding the picture comprises obtaining S502 a dominant angle for at least a part of a Spatial Geometric Partitioning Mode (SGPM) block.

*Encoding Method*

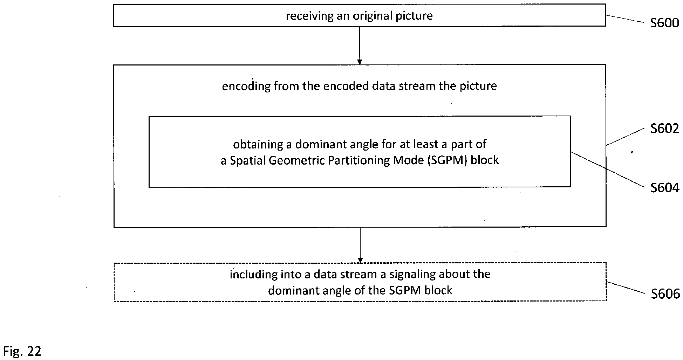

Fig. 22 illustrates a flow diagram of a method for encoding a picture into an encoded data stream. The encoded data stream includes data representing the picture and the method includes the following:

S600: Receiving an original picture.
S602: Encoding the picture into the encoded data stream, wherein encoding the picture comprises obtaining S604 a dominant angle for at least a part of a Spatial Geometric Partitioning Mode (SGPM) block.

Optionally, the method comprises including S606 into the data stream or bitstream an indication, e.g., a flag or an index or information, about the dominant angle of the SGPM block, e.g., one or more of the following:

- an indication of a dominant angle for at least a part of a Spatial Geometric Partitioning Mode (SGPM) block, e.g., an index of a predefined set of dominant angles, each entry in the predefined set associating a certain combination of size and partition mode of the SGPM block with a dominant angle,
- an indication of an index of a predefined set of threshold values, each entry of the predefined set providing for a certain size of a SGPM block respective threshold values for determining a dominant angle for at least a part of the SGPM block.

*Further embodiments*

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

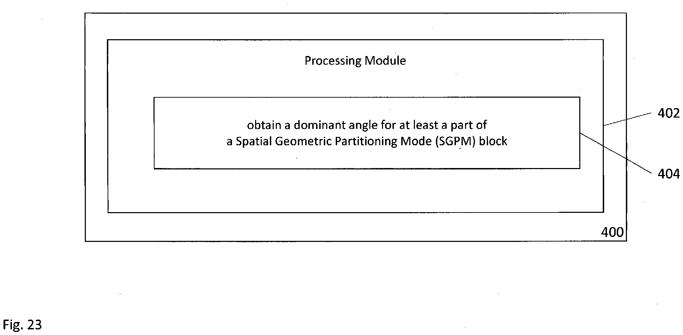

Fig. 23 illustrates a block diagram of an apparatus 400 of predicting one or more blocks of a picture in accordance with embodiments of the present disclosure. The apparatus 400 includes a processing module 402. The processing module is configured to obtain 404 a dominant angle for at least a part of a Spatial Geometric Partitioning Mode (SGPM) block.

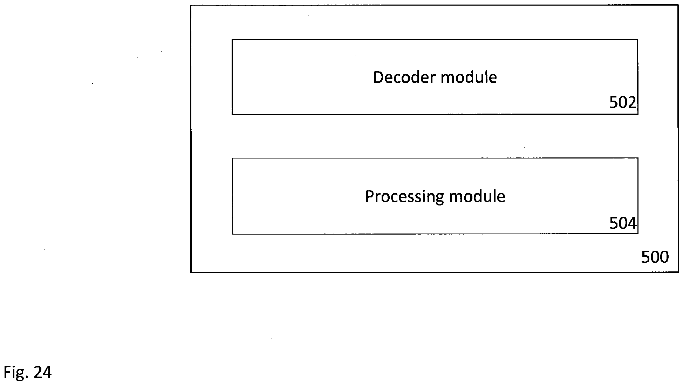

Fig. 24 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 23.

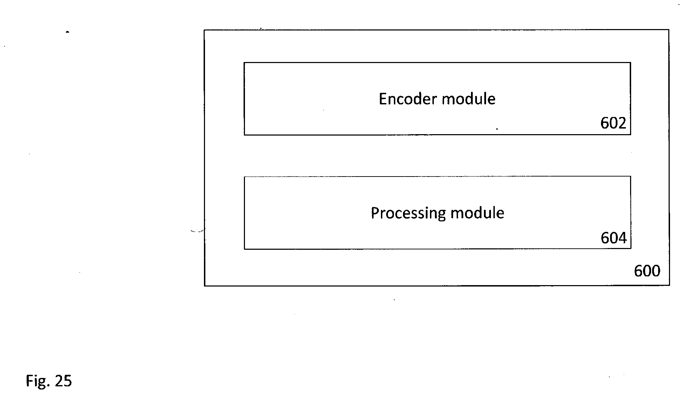

Fig. 25 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 23.

Fig. 26 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may an indication, e.g., a flag or an index or information, about the dominant angle of the SGPM block, e.g., one or more of the following:

- an indication of a dominant angle for at least a part of a Spatial Geometric Partitioning Mode (SGPM) block, e.g., an index of a predefined set of dominant angles, each entry in the predefined set associating a certain combination of size and partition mode of the SGPM block with a dominant angle,
- an indication of an index of a predefined set of threshold values, each entry of the predefined set providing for a certain size of a SGPM block respective threshold values for determining a dominant angle for at least a part of the SGPM block.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

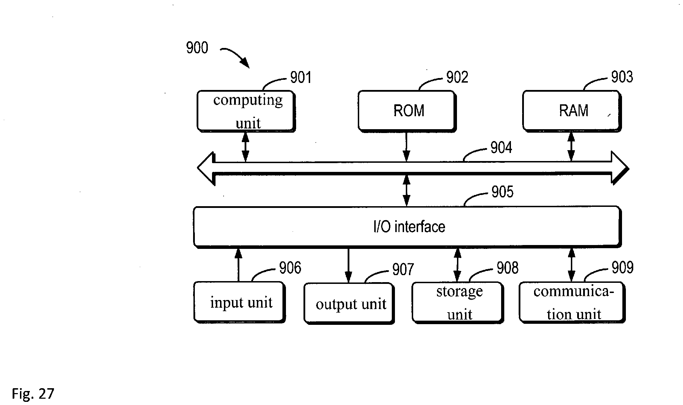

Fig. 27 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

1st embodiment provides a method of processing one or more blocks of a picture, the method comprising:
obtaining a dominant angle for at least a part of a Spatial Geometric Partitioning Mode (SGPM) block.

A 2nd embodiment provides the method of the 1st embodiment, wherein the dominant angle is obtained based on proportions of respective prediction modes within the SGPM block.

A 3rd embodiment provides the method of the 1st or 2nd embodiment, wherein an angle associated with a prediction mode having the highest proportion within the SGPM block is determined as the dominant angle.

A 4th embodiment provides the method of the 2nd or 3rd embodiment, wherein the prediction modes comprise Intra Prediction Modes (IPMs) and/or non Intra Prediction Modes (non-IPMs), e.g., a Block Vector (BV) based prediction mode.

A 5th embodiment provides the method of the 4th embodiment, wherein, in case the prediction mode having the highest proportion is a non-IPM, the dominant angle is obtained by

- applying a texture analysis method, e.g., a Decoder side Intra Mode Derivation (DIMD) process, on prediction samples obtained by the non-IPM prediction, or
- using an angle associated with another prediction mode, or
- using a default angle defined for a partition mode of the SGPM block.

A 6th embodiment provides the method of any one of the preceding embodiments, wherein the dominant angle is obtained using

- weights associated with some or all pixels of the respective partitions of the SGPM block, or
- a size of the SPGM block and a partition mode of the SPGM block.

A 7th embodiment provides the method of the 6th embodiment, wherein

- the weights of some or all pixels inside the SGPM block are summed for the prediction modes of the respective partitions,
- the prediction mode with the highest sum of weights is determined as a dominant prediction mode, and
- an angle associated with the dominant prediction mode is determined as the dominant angle.

An 8th embodiment provides the method of the 6th or 7th embodiment, wherein

- the SGPM block comprises a first partition associated with a first prediction mode, and a second partition associated with a second prediction mode,
- W0 is a sum of the weights applied to the first prediction mode of the first partition, and W1 is a sum of the weights applied to the second prediction mode of the second partition, and
- the dominant angle is defined as the angle associated with

  ∘ the first prediction mode when W0 is superior to W1 multiplied by a first threshold thr (W0 > thr*W1), and
  o the second prediction when W1 is superior to W0 multiplied by a second threshold thr2 (W1 > thr2*W0)

A 9th embodiment provides the method the 8th embodiment, wherein for a SGPM block having a *width, a height* and a highest weight of *max_weight,* e.g.*, max_weight = 32, thr * W1* and *thr2 * W*0 are determined as follows:

$$thr * W1 = \frac{(thr * width * height * max\_weight)}{(1 + thr)}$$

$$thr2 * W0 = \frac{(thr2 * width * height * max\_weight)}{(1 + thr2)}$$

A 10th embodiment provides the method of the 8th or 9th embodiment, wherein *thr * W*1 and *thr2 * W*0 are obtained from a predefined set, e.g., from a look-up table, each entry of the predefined set providing for a certain size of the SPGM block respective values for *thr * W1* and *thr2 * W*0*.

An 11th embodiment provides the method of any one of the 8th to 10th embodiments, wherein, in case W0 is not superior to W1 multiplied by the first threshold (thr), and W1 is not superior to W0 multiplied by the second threshold (thr2), the dominant angle is a default angle predefined for the SGPM block.

A 12th embodiment provides the method of any one of the 7th to 11th embodiments, wherein the dominant angle is obtained by using weights associated with all pixels of the respective partitions of the SGPM block.

A 13th embodiment provides the method of any one of the 7th to 11th embodiments, wherein the dominant angle is obtained by using weights associated with only a part of the pixels of the respective partitions of the SGPM block.

A 14th embodiment provides the method of the 13th embodiment, wherein the part of the pixels comprises one or more of the following:

- one or more rows of pixels adjacent to a horizontal edge of the SGPM block, e.g., a bottom row of the SGPM block,

- one or more columns of pixels adjacent to a vertical edge of the SGPM block, e.g., a right-most column of the SGPM block,
- one or more pixels adjacent to a corner of the SGPM block, e.g., a bottom-right pixel of the SGPM block.

A 15th embodiment provides the method of the 6th embodiment, wherein the dominant angle is obtained from a predefined set of dominant angles, e.g., from a look-up table, each entry in the predefined set associating a certain combination of size and partition mode of the SPGM block with a dominant angle.

A 16th embodiment provides the method of any one of the preceding embodiments, wherein the dominant angle is used for one of more aspects of processing the one or more blocks.

A 17th embodiment provides the method of the 16th embodiment, wherein the one of more aspects comprise one or more of the following:

- a transform selection, e.g., for one or more of the transform coding methods used in the Enhanced Compression Model (ECM),
- using a co-located luma block for selecting a chroma prediction,
- a Most Probable Mode (MPM) list construction.

An 18th embodiment provides the method of the 17th embodiment, wherein

- a currently processed block is a SGPM block,
- a representative intra mode for the SGPM block is determined using the dominant angle obtained by using the entire SGPM block, and
- the representative intra mode is used, e.g., along with a Transform Unit (TU) size, to select one or more transforms for the SGPM block.

A 19th embodiment provides the method of the 18th embodiment, wherein the one or more transforms include one or more of the following:

- a multiple transform selection, MTS,
- a low-frequency non-separable transform, LFNST,
- a non-separable primary transform, NSPT,
- any other transform coding mechanism that relies on an intra prediction direction for determining transform coding of the block.

A 20th embodiment provides the method of the 17th wherein

- a currently processed block is a chroma block,
- the SGPM block is a SGPM co-located luma block used by the chroma block for deriving a prediction mode,
- a representative intra mode of the SGPM co-located luma block is determined using the dominant angle, and
- the representative intra mode of the SGPM co-located luma block is used by the chroma block as the prediction mode.

A 21st embodiment provides the method of the 17th embodiment, wherein

- the SGPM block is a SGPM neighbor block of a currently processed block,
- a representative intra mode of the SGPM neighbor block is determined using the dominant angle, and
- the representative intra mode of the SGPM neighbor block is added to the MPM list.

A 22nd embodiment provides the method of the 21st embodiment, wherein the SGPM neighbor block is a block adjacent to the currently processed block, and wherein the representative intra mode of the SGPM neighbor block is determined using the dominant angle obtained by using only a part of the SGPM neighbor block, the part of the SGPM neighbor block being adjacent to the currently processed block.

A 23rd embodiment provides the method of the 22nd embodiment, wherein the part of the SGPM neighbor block comprises one or more of the following:

- in case the SGPM neighbor block is located above the currently processed block, one or more rows of pixels adjacent to the currently processed block,
- in case the SGPM neighbor block is located left of the currently processed block, one or more columns of pixels adjacent to the currently processed block,
- in case the SGPM neighbor block is located left and above the currently processed block, one or more pixels adjacent to a top-left pixel of the currently processed block.

A 24th embodiment provides the method of the 21st embodiment, wherein the SGPM neighbor block is a block not adjacent to the currently processed block, and wherein the representative intra mode of the SGPM neighbor block is determined using the dominant angle obtained by using the entire SGPM neighbor block.

A 25th embodiment provides the method of any one of the preceding embodiments, wherein the SGPM block is partitioned into a plurality of partitions, wherein each of the plurality of partitions uses a certain prediction mode, and wherein the dominant angle is an angle used by the prediction mode of one of the plurality of partitions.

A 26th embodiment provides the method of the 25th embodiment, wherein the method comprises:

- determining that the block is a SGPM block, e.g., from a flag cu_sgpm_flag signaled in a data stream including data representing the picture , and
- obtaining for the block a partition mode and the prediction modes of the respective partitions.

A 27th embodiment provides the method of the 26th embodiment, wherein the partition mode and the prediction modes are obtained using a candidate list, e.g., by using an index sgpm_cand_idx of the candidate list signaled in the data stream, each entry of the candidate list containing one partition mode and two prediction modes.

A 28th embodiment provides a method for decoding an encoded data stream, the encoded data stream including data representing a picture, the method comprising:

decoding from the encoded data stream the picture,
wherein decoding the picture includes processing one or more blocks of a picture according to the method of any one of the preceding embodiments.

A 29th embodiment provides a method for encoding a picture into an encoded data stream, the encoded data stream including data representing the picture, the method comprising:

receiving an original picture, and
encoding the picture into the encoded data stream,
wherein encoding the picture includes processing one or more blocks of a picture according to the method of any one of the preceding embodiments.

A 30th embodiment provides a non-transitory computer-readable storage medium comprising instructions which, when executed by a computer, cause the computer to carry out the method of any one of the preceding embodiments.

A 31st embodiment provides an apparatus of processing one or more blocks of a picture, the apparatus comprising: a processing module, wherein the processing module is configured obtain a dominant angle for at least a part of a Spatial Geometric Partitioning Mode (SGPM) block.

A 32nd embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to the 31st embodiment.

A 33rd embodiment provides an apparatus for encoding a picture into an encoded data stream, the encoded data stream including data representing the picture, the apparatus comprising:

an encoder module configured to receive the original picture and to encode the picture into the encoded data stream, and

a prediction module, the prediction module including an apparatus according to the 31st embodiment.

A 34th embodiment provides a data stream having encoded thereinto a picture, wherein the data stream comprises one or more of the following:

- an indication of a dominant angle for at least a part of a Spatial Geometric Partitioning Mode (SGPM) block, e.g., an index of a predefined set of dominant angles, each entry in the predefined set associating a certain combination of size and partition mode of the SPGM block with a dominant angle,

an indication of an index of a predefined set of threshold values, each entry of the predefined set providing for a certain size of a SPGM block respective threshold values for determining a dominant angle for at least a part of the SGPM block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

**Claims**

1. A method of processing one or more blocks of a picture, the method comprising:
obtaining a dominant angle for at least a part of a Spatial Geometric Partitioning Mode (SGPM) block.

2. The method of claim 1, wherein the dominant angle is obtained based on proportions of respective prediction modes within the SGPM block, and wherein an angle associated with a prediction mode having the highest proportion within the SGPM block is determined as the dominant angle.

3. The method of claim 2, wherein

the prediction modes comprise Intra Prediction Modes (IPMs) and/or non Intra Prediction Modes (non-IPMs), e.g., a Block Vector (BV) based prediction mode, and
in case the prediction mode having the highest proportion is a non-IPM, the dominant angle is obtained by

- applying a texture analysis method, e.g., a Decoder side Intra Mode Derivation (DIMD) process, on prediction samples obtained by the non-IPM prediction, or
- using an angle associated with another prediction mode, or
- using a default angle defined for a partition mode of the SGPM block.

4. The method of any one of the preceding claims, wherein the dominant angle is obtained using

- weights associated with some or all pixels of the respective partitions of the SGPM block, or
- a size of the SPGM block and a partition mode of the SPGM block.

**5.** The method of claim 4, wherein

- the weights of some or all pixels inside the SGPM block are summed for the prediction modes of the respective partitions,
- the prediction mode with the highest sum of weights is determined as a dominant prediction mode, and
- an angle associated with the dominant prediction mode is determined as the dominant angle.

**6.** The method of claim 5, wherein

the dominant angle is obtained by using weights associated with all pixels of the respective partitions of the SGPM block, or

the dominant angle is obtained by using weights associated with only a part of the pixels of the respective partitions of the SGPM block, the part of the pixels comprising one or more of the following:

- one or more rows of pixels adjacent to a horizontal edge of the SGPM block, e.g., a bottom row of the SGPM block,
- one or more columns of pixels adjacent to a vertical edge of the SGPM block, e.g., a right-most column of the SGPM block,
- one or more pixels adjacent to a corner of the SGPM block, e.g., a bottom-right pixel of the SGPM block.

**7.** The method of claim 4, wherein the dominant angle is obtained from a predefined set of dominant angles, e.g., from a look-up table, each entry in the predefined set associating a certain combination of size and partition mode of the SPGM block with a dominant angle.

**8.** The method of any one of the preceding claims, wherein the dominant angle is used for one of more of the following:

- a transform selection, e.g., for one or more of the transform coding methods used in the Enhanced Compression Model (ECM),
- using a co-located luma block for selecting a chroma prediction,
- a Most Probable Mode (MPM) list construction.

**9.** The method of claim 8, wherein

- a currently processed block is a SGPM block,
- a representative intra mode for the SGPM block is determined using the dominant angle obtained by using the entire SGPM block, and
- the representative intra mode is used, e.g., along with a Transform Unit (TU) size, to select one or more transforms for the SGPM block.

**10.** The method of claim 8, wherein

- a currently processed block is a chroma block,
- the SGPM block is a SGPM co-located luma block used by the chroma block for deriving a prediction mode,
- a representative intra mode of the SGPM co-located luma block is determined using the dominant angle, and
- the representative intra mode of the SGPM co-located luma block is used by the chroma block as the prediction mode.

**11.** The method of claim 8, wherein

- the SGPM block is a SGPM neighbor block of a currently processed block,
- a representative intra mode of the SGPM neighbor block is determined using the dominant angle, and
- the representative intra mode of the SGPM neighbor block is added to the MPM list.

**12.** The method of claim 11, wherein the SGPM neighbor block is a block adjacent to the currently processed block, the representative intra mode of the SGPM neighbor block is determined using the dominant angle obtained by using only a part of the SGPM neighbor block, and the part of the SGPM neighbor block comprises one or more of the following:

- in case the SGPM neighbor block is located above the currently processed block, one or more rows of pixels adjacent to the currently processed block,
- in case the SGPM neighbor block is located left of the currently processed block, one or more columns of pixels adjacent to the currently processed block,
- in case the SGPM neighbor block is located left and above the currently processed block, one or more pixels adjacent to a top-left pixel of the currently processed block.

13. The method of claim 11, wherein the SGPM neighbor block is a block not adjacent to the currently processed block, and wherein the representative intra mode of the SGPM neighbor block is determined using the dominant angle obtained by using the entire SGPM neighbor block.

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured obtain a dominant angle for at least a part of a Spatial Geometric Partitioning Mode (SGPM) block.

Fig. 1

156   158   160   162
172
152 Bit-stream → Entropy decoder → Partitioning → Inverse Quantization → Inverse Transform

174
108   176   164
Intra Prediction   178
Motion Compensation   In-loop Filters → Post-decoding processing → 154
150
Decoded picture buffer
170   182   184   180   166   168

Fig. 2

Fig. 3

Fig. 4

Start MPM list construction — S10

Add IPM from position L with offset (-1, height-1) — S12

Add IPM from position A with offset (width-1, -1) — S14

Add IPM from position AL with offset (-1, -1) — S16

Add IPM from position AR with offset (width, -1) — S18

Add IPM from position BL with offset (-1, height) — S20

Continue MPM list construction by adding IPM from DIMD and non-adjacent block — S22

Fig. 5

16 input coefficients for 4x4 forward LFNST
64 input coefficients for 8x8 forward LFNST

Forward low-frequency
non-separable transform

Forward
Primary
Transform

Quantization

bitstream

Inverse
Primary
Transform

De-
Quantization

Inverse low-frequency
non-separable transform

8 input coefficients for 4x4 inverse LFNST
16 input coefficients for 8x8 inverse LFNST

Fig. 6

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

Fig. 7

Fig. 8

Fig. 9

```
If(cu_sgpm_flag)
{
  partition_mode_idx
  intra_pred_mode0_idx
  intra_pred_mode1_idx
}
```

(A)

```
If(cu_sgpm_flag)
{
  sgpm_cand_idx
}
```

```
  partition_mode_idx
  intra_pred_mode0_idx
  intra_pred_mode1_idx
```

(B)

Fig. 10

Template size

Current
Block

Template size

Fig. 11

GPM partitioning boundary

Fig. 12

obtaining a dominant angle for at least a part of
a Spatial Geometric Partitioning Mode (SGPM) block

S100

Fig. 13

200

partition 0  partition 1

| 32 | 32 | 30 | 26 | 22 | 18 | 14 | 10 | 6 | 2 | 0 | 0 | 0 | 0 | 0 | 0 |
|---|---|---|---|---|---|---|---|---|---|---|---|---|---|---|---|
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |
| 32 | 32 | 30 | 26 | 22 | 18 | 14 | 10 | 6 | 2 | 0 | 0 | 0 | 0 | 0 | 0 |

| 0 | 0 | 2 | 6 | 10 | 14 | 18 | 22 | 26 | 30 | 32 | 32 | 32 | 32 | 32 | 32 |
|---|---|---|---|---|---|---|---|---|---|---|---|---|---|---|---|
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |
| 0 | 0 | 2 | 6 | 10 | 14 | 18 | 22 | 26 | 30 | 32 | 32 | 32 | 32 | 32 | 32 |

(A)                              (B)                              (C)

Fig. 14

S200 — Dominant angle determination for SGPM block

S202 —
W0 = 0
W1 = 0
dominantAngle = -1

S204 — Set W0 as the sum of the weights

S206 — Set W1 as the sum of 32 - weights

S208 — W0 > thr * W1

S210 — dominantAngle = angle(Pred0) — 1

S214 — W1 > thr2 * W0

S216 — dominantAngle = angle(Pred1) — 1

S218 — dominantAngle = angle(default)

S212 — Continue SGPM process

Fig. 15

Fig. 16

210

partition 1

partition 0

(A)

```
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
0  0  0  0  0  0  0  0  0  0  0  0  0  0  0  0
2  2  2  2  2  2  2  2  2  2  2  2  2  2  2  2
6  6  6  6  6  6  6  6  6  6  6  6  6  6  6  6
10 10 10 10 10 10 10 10 10 10 10 10 10 10 10 10
14 14 14 14 14 14 14 14 14 14 14 14 14 14 14 14
18 18 18 18 18 18 18 18 18 18 18 18 18 18 18 18
22 22 22 22 22 22 22 22 22 22 22 22 22 22 22 22
```

(B)

```
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
32 32 32 32 32 32 32 32 32 32 32 32 32 32 32 32
30 30 30 30 30 30 30 30 30 30 30 30 30 30 30 30
26 26 26 26 26 26 26 26 26 26 26 26 26 26 26 26
22 22 22 22 22 22 22 22 22 22 22 22 22 22 22 22
18 18 18 18 18 18 18 18 18 18 18 18 18 18 18 18
14 14 14 14 14 14 14 14 14 14 14 14 14 14 14 14
10 10 10 10 10 10 10 10 10 10 10 10 10 10 10 10
```

212

(C)

Fig. 17

42

S250 — Sub-dominant angle determination for SGPM block

S252 —
sW0 = 0
sW1 = 0
subDominantAngle = -1

S254 — Set sW0 as the sum of the weights[height-1]

S256 — Set sW1 as the sum of 32 – weights[height-1]

S258

sW0 > thr * sW1

1
subDominantAngle = angle(Pred0)
S260

0

S264

sW1 > thr2 * sW0

1
subDominantAngle = angle(Pred1)
S266

0

S218
subDominantAngle = angle(default)

Continue SGPM process
S262

Fig. 18

Fig. 19

Fig. 20

decoding from the encoded data stream the picture

obtaining a dominant angle for at least a part of
a Spatial Geometric Partitioning Mode (SGPM) block

S500

S502

Fig. 21

receiving an original picture ──── S600

encoding from the encoded data stream the picture

S602

obtaining a dominant angle for at least a part of
a Spatial Geometric Partitioning Mode (SGPM) block

S604

including into a data stream a signaling about the
dominant angle of the SGPM block ──── S606

Fig. 22

Processing Module

obtain a dominant angle for at least a part of
a Spatial Geometric Partitioning Mode (SGPM) block

402

404

400

Fig. 23

```
┌─────────────────────────────────────────────────────┐
│  ┌───────────────────────────────────────────────┐  │
│  │                                               │  │
│  │              Decoder module                   │  │
│  │                                               │  │
│  │                                        502    │  │
│  └───────────────────────────────────────────────┘  │
│                                                     │
│  ┌───────────────────────────────────────────────┐  │
│  │                                               │  │
│  │            Processing module                  │  │
│  │                                               │  │
│  │                                        504    │  │
│  └───────────────────────────────────────────────┘  │
│                                              500    │
└─────────────────────────────────────────────────────┘
```

Fig. 24

| Encoder module |
| --- |
| 602 |

| Processing module |
| --- |
| 604 |

600

Fig. 25

Fig. 26

900

901
computing unit

902
ROM

903
RAM

904

905
I/O interface

906
input unit

907
output unit

908
storage unit

909
communication unit

Fig. 27

Europäisches Patentamt

European Patent Office

Office européen des brevets

# EUROPEAN SEARCH REPORT

**Application Number**

EP 25 31 5004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/137542 A1 (ZHAO XIN [US] ET AL) 25 April 2024 (2024-04-25) | 1-3,8,9, 14,15 | INV. H04N19/11 |
| Y | * figures 8,9 * <br> * paragraph [0085] - paragraph [0089] * <br> * paragraph [0101] - paragraph [0103] * <br> ----- | 4-7, 10-13 | H04N19/119 <br> H04N19/157 <br> H04N19/176 <br> H04N19/593 |
| Y | WO 2024/174828 A1 (MEDIATEK INC [CN]) 29 August 2024 (2024-08-29) <br> * paragraph [0432] - paragraph [0447] * <br> * paragraph [0504] - paragraph [0506] * <br> ----- | 4-7, 10-13 | |
| A | WO 2024/146511 A1 (MEDIATEK INC [CN]) 11 July 2024 (2024-07-11) <br> * paragraph [0114] - paragraph [0124]; figures 11, 12 * <br> ----- | 1-15 | |
| A | WANG (OPPO) F ET AL: "EE2-4.4a: Multiple transform set selection for intra LFNST/NSPT without complexity reduction", 35. JVET MEETING; 20240712 - 20240719; SAPPORO; (THE JOINT VIDEO EXPLORATION TEAM OF ISO/IEC JTC1/SC29/WG11 AND ITU-T SG.16 ), <br> , <br> no. JVET-AI0163 <br> 12 July 2024 (2024-07-12), XP030320433, <br> Retrieved from the Internet: <br> URL:https://jvet-experts.org/doc_end_user/ documents/35_Sapporo/wg11/JVET-AI0163-v3.z ip JVET-AI0163-v3-clean.docx <br> [retrieved on 2024-07-12] <br> * the whole document * <br> ----- <br> -/-- | 1-15 | **TECHNICAL FIELDS SEARCHED (IPC)** <br><br> H04N |

The present search report has been drawn up for all claims

| Place of search | Date of completion of the search | Examiner |
|---|---|---|
| Munich | 10 June 2025 | Kopilovic, Ivan |

EPO FORM 1503 03.82 (P04C01)

page 1 of 2

| | Europäisches Patentamt European Patent Office Office européen des brevets | **EUROPEAN SEARCH REPORT** | **Application Number** EP 25 31 5004 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARCZEWICZ (QUALCOMM) M ET AL: "EE2-related: On implicit MTS", 36. JVET MEETING; 20241101 - 20241108; KEMER; (THE JOINT VIDEO EXPLORATION TEAM OF ISO/IEC JTC1/SC29/WG11 AND ITU-T SG.16 ), , no. JVET-AJ0259 24 October 2024 (2024-10-24), XP030326306, Retrieved from the Internet: URL:https://jvet-experts.org/doc_end_user/ documents/36_Kemer/wg11/JVET-AJ0259-v2.zip JVET-AJ0259-v2/JVET-AJ0259-v2.docx [retrieved on 2024-10-24] * the whole document * ----- | 1-15 | |
| A | COBAN M ET AL: "Algorithm description of Enhanced Compression Model 14 (ECM 14)", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI2025 21 October 2024 (2024-10-21), XP030323411, Retrieved from the Internet: URL:https://jvet-experts.org/doc_end_user/ documents/35_Sapporo/wg11/JVET-AI2025-v1.z ip JVET-AI2025-v1.docx [retrieved on 2024-10-21] * section 3.1.17 Spatial Geometric partitioning mode (SGPM) * * section 3.3.4 Enhanced MTS for intra coding * ----- | 1-15 | TECHNICAL FIELDS SEARCHED (IPC) |

The present search report has been drawn up for all claims

| Place of search | Date of completion of the search | Examiner |
|---|---|---|
| Munich | 10 June 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 31 5004

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | | Publication date | Patent family member(s) | | Publication date |
|---|---|---|---|---|---|
| US 2024137542 | A1 | 25-04-2024 | KR | 20240065135 A | 14-05-2024 |
| | | | US | 2024137542 A1 | 25-04-2024 |
| | | | WO | 2024086725 A1 | 25-04-2024 |
| WO 2024174828 | A1 | 29-08-2024 | NONE | | |
| WO 2024146511 | A1 | 11-07-2024 | NONE | | |

EPO FORM P0459

For more details about this annex : see Official Journal of the European Patent Office, No. 12/82